(19) Europäisches Patentamt

European Patent Office

Office européen des brevets

(11) **EP 2 185 450 B1**

(12) **FASCICULE DE BREVET EUROPEEN**

(45) Date de publication et mention
de la délivrance du brevet:
**10.04.2013 Bulletin 2013/15**

(21) Numéro de dépôt: **08826336.3**

(22) Date de dépôt: **26.06.2008**

(51) Int Cl.:
**B65G 53/18** (2006.01)     **B65G 53/20** (2006.01)

(86) Numéro de dépôt international:
**PCT/FR2008/000903**

(87) Numéro de publication internationale:
**WO 2009/010667 (22.01.2009 Gazette 2009/04)**

(54) **PROCEDE PERMETTANT DE CONVOYER SANS SEGREGATION DES MATERIAUX PULVERULENTS**

**VERFAHREN ZUM TRANSPORT VON PULVERFÖRMIGEN MATERIALIEN OHNE ENTMISCHUNG**

**METHOD FOR TRANSPORTING POWDERY MATERIALS WITHOUT SEGREGATION**

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.07.2007 FR 0705227**

(43) Date de publication de la demande:
**19.05.2010 Bulletin 2010/20**

(73) Titulaire: **Rio Tinto Alcan International Limited Montreal, QC H3A 3G2 (CA)**

(72) Inventeurs:
• **ROUMIEU, Raymond**
  **F-13100 Aix en Provence (FR)**
• **HEMATI, Mehrdji**
  **F-31860 Pins Justaret (FR)**
• **PLAIS, Cécile**
  **F-31600 Muret (FR)**
• **ROUSSEAUX, Jean-Marc**
  **F-13100 Aix-en-Provence (FR)**
• **CLOUE, Christian**
  **F-13120 Gardanne (FR)**

(74) Mandataire: **Mérigeault, Thierry Louis Henri et al Rio Tinto France SAS Industrial Property Department 725, rue Aristide Bergès BP25 Voreppe 38341 Moirans Cedex (FR)**

(56) Documents cités:
**EP-B- 1 086 035     US-A- 3 268 264**

**Description**

L'invention concerne un procédé de convoyage permettant de transporter, à l'aide de canalisations substantiellement horizontales, un matériau pulvérulent depuis une zone d'alimentation, typiquement une zone de stockage dudit matériau pulvérulent, jusqu'à une zone distante de la première zone et destinée à être alimentée avec ledit matériau pulvérulent. Ce procédé concerne plus particulièrement un procédé permettant de transporter dans des canalisations substantiellement horizontales un matériau pulvérulent composé d'un mélange de particules dont la répartition granulométrique et la répartition en densité n'est pas nécessairement unimodale mais qui, homogène dans la zone d'alimentation, doit être délivré dans la zone à alimenter avec une homogénéité substantiellement aussi bonne que celle du mélange initial.

De nombreux dispositifs ont été décrits permettant de transporter un matériau pulvérulent sur de longues distances. La plupart d'entre eux font appel à une technologie de transport par lit fluidisé. Ainsi US 3 268 264 décrit un procédé permettant de transporter un matériau pulvérulent dans lequel on installe un dispositif entre la zone d'alimentation et la zone à alimenter, ledit dispositif étant un dispositif clos comprenant au moins un convoyeur substantiellement horizontal, qui comprend un canal inférieur destiné à la circulation d'un gaz et un canal supérieur destiné à la circulation du matériau pulvérulent, ledit canal inférieur et ledit canal supérieur étant séparés par une paroi poreuse pouvant être traversée par ledit gaz et ledit canal inférieur étant muni d'au moins une tubulure d'alimentation en gaz. On alimente le canal inférieur en gaz sous une pression permettant la fluidisation dudit matériau pulvérulent dans ledit canal supérieur. Un tel dispositif, destiné au transport de charbon pulvérulent pour alimenter des centrales thermiques, décrit un système de compartimentage dans le canal inférieur permettant d'imposer une pression de fluidisation variable le long de l'aérocanalisation. Dans les conditions d'exploitation décrites dans ce document le matériau fluidisé s'écoule selon un régime turbulent, avec un débit de gaz de fluidisation assez élevé.

On connaît par ailleurs, par le brevet français FR 2 534 891 (ALUMINIUM PECHINEY), un dispositif permettant de fluidifier potentiellement un matériau pulvérulent avec un faible débit de gaz de fluidisation de sorte que le matériau pulvérulent est maintenu dans un état que l'on désigne par "phase hyperdense" Avec un tel dispositif, on peut transporter, grâce à des canalisations substantiellement horizontales, ledit matériau en phase hyperdense depuis une zone d'alimentation jusqu'à une zone à alimenter. Le dispositif de FR 2 354 891 se distingue de celui de US 3 268 264 essentiellement par le fait que le canal supérieur est muni d'au moins une colonne d'équilibrage dont l'extrémité supérieure ouverte est en communication avec l'extérieur dudit dispositif clos et qui est remplie en matériau pulvérulent. La hauteur de remplissage dans la colonne équilibre la pression régnant dans le canal supérieur. Le matériau pulvérulent est ainsi mis en état de fluidisation potentielle: le mélange gaz + matériau pulvérulent se comporte comme un liquide et reste immobile tant qu'il n'y a pas de consommation de matériau pulvérulent puis, dès qu'un vide se crée dans la zone à alimenter, des micro-éboulements successifs se produisent depuis ledit vide jusqu'à la zone de stockage, de sorte que le matériau pulvérulent circule avec un flux controlé, juste nécessaire au besoin de la zone à alimenter. L'air est alimenté sous une pression faible comparativement aux autres procédés de transport en phase dense et le déplacement du gaz comme celui des particules s'effectue à faible vitesse, ce qui permet de limiter l'usure du matériel ainsi que l'attrition du produit. La colonne d'équilibrage est de préférence montée verticalement. Sa section est de préférence comprise entre S/20 et S/200, S étant la surface totale de ladite paroi poreuse.

Dans le brevet européen EP 1 086 035 (ALUMINIUM PECHINEY), le procédé précédent est amélioré en aménageant le canal supérieur de sorte qu'il puisse se former une bulle de gaz sous pression dans sa partie supérieure. De la sorte, le fonctionnement est plus stable: on diminue les risques de blocage complet dans l'aérocanalisation lorsque le dégazage ne se fait pas ou est incomplet dans une des colonnes d'équilibrage. Typiquement, on met en place sur le ciel du canal supérieur des parois formant barrage et "figeant" la bulle dans le ciel dudit canal supérieur. La hauteur de ces barrages est inférieure à la moitié de la hauteur du canal supérieur. Typiquement, elle est de l'ordre du dixième de ladite hauteur. De préférence, le ciel du canal supérieur est aménagé de telle sorte qu'à une bulle donnée, délimitée par lesdites parois formant barrage, est associée une colonne d'équilibrage du dispositif. Le EP 1086 035 décrit un procédé permettant de transporter, par fluidation potentielle, un matériau pulvérulent selon le préambule de la revendication 1.

Le dispositif à fluidisation potentielle de convoyage en lit hyperdense, tel que décrit dans les précédents brevets, est exploité à grande échelle, notamment pour alimenter les cuves des installations récentes réalisant l'électrolyse ignée de l'aluminium. Les avantages de ce dispositif sont bien connus:

- une alimentation continue des cuves permettant de maintenir les trémies toujours pleines,
- un faible entretien du système,
- des pressions d'air nécessaires à la fluidisation relativement faible (0,1 bar comparé à 6 bars pour le transport pneumatique en phase dense),
- un déplacement à faible vitesse de l'alumine limitant l'usure du matériel et l'attrition ou l'agglomération du produit.

Mais, s'il présente tous les avantages précités, ce dispositif peut présenter quelques inconvénients si l'on ne prend pas quelques précautions particulières:

- une consommation de gaz de fluidisation, et donc d'énergie, non optimisée,
- des envolements, c'est-à-dire des recyclages d'alumine, importants par les colonnes d'équilibrage,
- un risque de ségrégation granulométrique par envolement préférentiel des particules les plus fines.

D'autre part, dans un atelier d'électrolyse, le nombre de zones à alimenter à partir d'une seule zone de stockage est important (plusieurs dizaines). De plus, la distance entre la zone de stockage et la zone à alimenter peut être importante (plusieurs centaines de mètres). Pour répondre à ces contraintes, la demanderesse a proposé le dispositif illustré dans EP-B-0 179 055, constitué d'une série de convoyeurs en cascade: un convoyeur primaire reliant la zone de stockage à une série de convoyeur secondaires, chacun affecté à une cuve et muni de piquages latéraux alimentant des trémies intégrées à la superstructure de la cuve. Tout ceci constitue un réseau d'aérocanalisations permettant de transférer en lit hyperdense l'alumine sur plusieurs centaines de mètres, typiquement entre 400 et 800 mètres. Toutefois, la demanderesse a constaté que sur de telles distances, il était parfois difficile d'éviter l'apparition de phénomènes de ségrégation en certain endroits.

Au-delà de ce problème, rencontré spécifiquement dans le cadre du transport de l'alumine, la demanderesse a cherché à mieux définir les conditions dans lesquelles un matériau pulvérulent qui résulte d'un mélange homogène de particules de tailles granulométriques différentes, voire un matériau qui résulte également d'un mélange homogène de particules de densités différentes, peut circuler dans telles aérocanalisations sans qu'il se produise de ségrégation. Autrement dit, la demanderesse a cherché à définir les conditions optimales de transport par fluidisation potentielle d'un tel matériau pulvérulent grâce auxquelles ledit matériau présente la même répartition granulométrique ou la même répartition en densité lorsqu'il arrive dans la zone à alimenter.

Un premier objet de l'invention est un procédé permettant de transporter, par fluidisation potentielle, un matériau pulvérulent, selon la revendication 1.

Le dispositif utilisé est un dispositif clos ne communiquant avec l'extérieur que par la zone d'alimentation et la zone à alimenter pour ce qui concerne le matériau pulvérulent et que par la canalisation d'entrée, de préférence unique, et les extrémités ouvertes des colonnes d'équilibrage pour ce qui concerne le gaz de fluidisation. Il comprend au moins un convoyeur substantiellement horizontal, en ce sens qu'il peut être constitué d'une série ou d'un réseau de convoyeurs de type aérocanalisations horizontales ou légèrement inclinées, avec une pente typiquement inférieure à 10°, de préférence inférieure à 5° par rapport à l'horizontale.

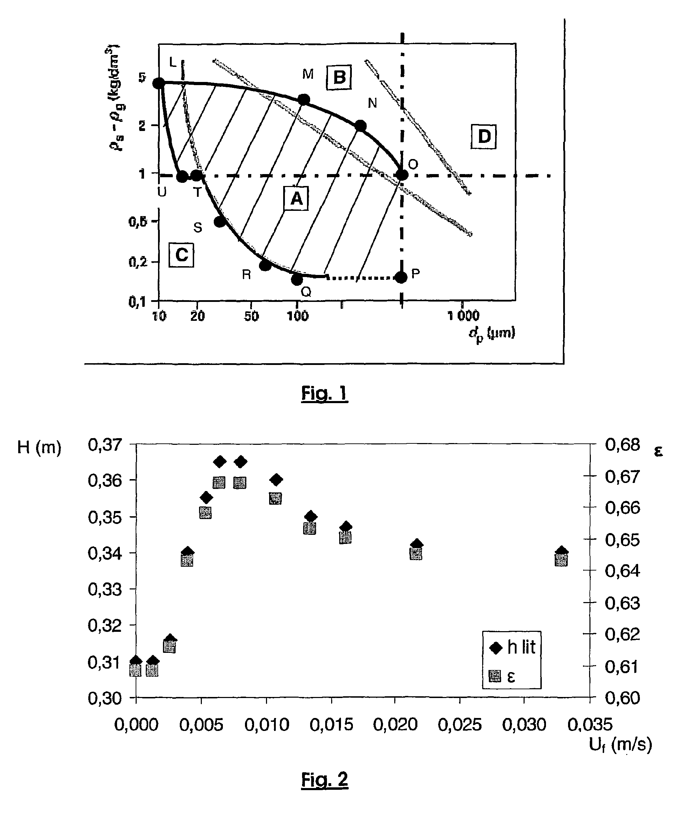

Le matériau pulvérulent particulièrement adapté pour le procédé selon l'invention est un matériau facilement fluidisable, dont les particules présentent une forme globalement convexe avec un facteur de forme (rapport de Ferret) assez proche de 1, typiquement compris entre 0,5 et 2, avec une taille, par exemple représentée par le diamètre médian D50, typiquement comprise entre 15 microns et 500 microns. Ce matériau peut également avoir une distribution granulométrique mono- ou plurimodale. Il peut également s'agir d'un mélange de matériaux de compositions chimiques et/ou de densités différentes. En reprenant la présentation proposée par Geldart en 1973 pour permettre la classification des poudres suivant leur aptitude à la fluidisation, c'est-à-dire en présentant le matériau par un point ayant pour abscisse le logarithme de sa taille moyenne dp et pour ordonnée le logarithme de la différence entre sa masse volumique moyenne $\rho_s$ et celle du gaz de fluidisation $\rho_g$, on peut indiquer que le présent procédé s'applique particulièrement bien aux matériaux appartenant à la zone hachurée portée sur la Figure 1, correspondant approximativement à un polygone ayant les 10 sommets suivants: L(10;5); M(100;4); N(300;2); O(500;1); P(500;0,15); Q(100;0,15); R(60; 0,2); S(30;0,5); T(20;1); U(15;1) où les abscisses sont les logarithmes des valeurs exposées entre parenthèses à gauche et qui correspondent aux tailles des particules exprimées en $\mu$m et les ordonnées sont les logarithmes des valeurs exposées entre parenthèses à droite et qui correspondent aux différences de masses volumiques exprimées en kg/dm$^3$. Comme dans la pratique, on trouve peu de particules ayant une densité inférieure à 1, on peut définir le domaine des poudres les mieux adaptées à la mise en oeuvre du procédé selon l'invention comme étant le polygone LMNOU, c'est-à-dire la zone délimitée par les inéquations suivantes :

a) Y ≥ 0
b) Y + 3,969 X - 4,668 ≥ 0
c) Y + 0,097 X - 0,796 ≤ 0
d) Y + 0,631 X - 1,864 ≤ 0
e) Y + 1,357 X - 3,662 ≤ 0

où X=$\log_{10}(d_p)$, dp étant exprimé en micromètres et où Y= $\log_{10}(\rho_s-\rho_g)$, $p_s$ et $\rho_g$ étant exprimés en kg/dm$^3$.
Les poudres facilement fluidisables se caractérisent par:

- une fluidisation particulaire qui se traduit par une forte expansion du lit avec la croissance de la vitesse de fluidisation et l'apparition du bullage quand la vitesse de l'air est nettement supérieure à la vitesse minimale de fluidisation ;
- une désaération lente quand la fluidisation est interrompue: ces poudres restent longtemps fluides;
- une tendance au fusage lors de la vidange d'une trémie, c'est-à-dire un écoulement de type fluide à travers l'obturateur. L'alumine utilisée pour la production d'aluminium par électrolyse fait partie de cette catégorie.

Pour caractériser l'état de fluidisation d'une poudre facilement fluidisable, on dépose une couche de ladite poudre sur une paroi poreuse horizontale à l'intérieur d'une colonne assimilable à un cylindre vertical, que nous appellerons par la suite « colonne de fluidisation ». On fait circuler un gaz à travers la couche dans le sens ascendant, en faisant augmenter progressivement sa vitesse ascendante. En pratique, on fait varier en fait le débit de gaz. On peut alors observer les phénomènes successifs suivants:

- pour les plus faibles vitesses, la couche de particules solides reste sur la grille sans mouvements visibles. Si on augmente encore la vitesse, on observe des vibrations de particules.
- à partir d'une vitesse $U_{mf}$ (vitesse minimale de fluidisation), on note une expansion de la couche: on atteint ainsi la transition entre l'état fixe et l'état fluidisé du lit de particules. Pour la suite, nous appellerons vitesse de fluidisation la vitesse ascendante du gaz qui permet d'atteindre un état fluidisé.
- en augmentant encore la vitesse ascendante du gaz, le lit poursuit son expansion: on peut alors décrire l'état fluidisé. Les particules sont indépendantes les unes des autres. Elles sont soumises à des mouvements désordonnés de faible amplitude. On ne note aucun mouvement de translation de l'ensemble par rapport au fluide. La surface supérieure du lit est pratiquement nette et horizontale. Le lit est assimilable à un liquide.
- à partir d'une certaine vitesse ascendante du gaz, des hétérogénéités apparaissent dans le lit avec des phénomènes de bullage (création dans le lit de cavités de fluide qui grossissent, coalescent et s'élèvent à la surface). L'aspect de la surface du fluide est alors celui d'un liquide à l'ébullition. C'est le régime de fluidisation bouillonnante ;
- si la vitesse du gaz augmente encore, la taille et le nombre des bulles, dont la forme devient irrégulière, augmentent progressivement, ces dernières entraînant de plus en plus de particules solides dans leur sillage : c'est le régime de fluidisation turbulente;
- au-delà d'une certaine vitesse, appelée vitesse terminale de chute libre des particules, les particules, entraînées par le courant gazeux, quittent la suspension: c'est le phénomène d'entraînement. L'application de ce phénomène est le transport mécanique classique des solides pulvérulents, typiquement à l'aide de convoyeurs appelés aéroglissières.

Revenons aux basses vitesses de fluidisation, qui gouvernent le régime devant régner au sein du canal supérieur de l'aérocanalisation. Selon l'invention, on détermine au préalable, empiriquement ou semi-empiriquement, une vitesse de fluidisation de référence égale à la vitesse moyenne de fluidisation du gaz correspondant au maximum du taux de vide. Cette détermination peut être effectuée par exemple en utilisant la colonne de fluidisation décrite précédemment.

Le taux de vide est directement relié à la masse volumique apparente de la suspension. Il est défini comme étant la différence entre la masse volumique apparente des particules et la masse volumique de la suspension, exprimée en pourcentage par rapport à la masse volumique apparente des particules.

Autrement dit, le taux de vide $\varepsilon_{LF}$ est déterminé par la relation : $\varepsilon_{LF} = \dfrac{(\rho_s - \rho_{LF})}{\rho_s}$, où $\rho_s$ est la masse volumique apparente des particules et où la masse volumique de la suspension $\rho_{LF}$ est donnée par le rapport : $\dfrac{masse\ particules}{volume\ suspension} = \dfrac{m_p}{h_{LF}S}$. Pour une suspension donnée, la masse $m_p$ étant constante et la section S de la colonne étant constante, le taux de vide dépend essentiellement de la hauteur $h_{LF}$ prise par le lit fluidisé dans ladite colonne. Ainsi, un taux de vide maximum correspond à une masse volumique apparente de la suspension minimum.

La figure 2 illustre un exemple où l'on a mesuré dans une colonne de fluidisation la hauteur H d'un lit fluidisé d'alumine métallurgique en fonction de la vitesse ascendante $U_f$ de gaz : on constate que la hauteur du lit, donc son volume, commence à augmenter de manière significative à partir d'une certaine valeur de la vitesse ascendante, assimilée à la vitesse minimale de fluidisation $U_{mf}$, ici voisine de 3 mm/s, atteint un maximum puis se met à décroître à partir d'une valeur $U_{mb}$, ici de l'ordre de 7 mm/s, correspondant approximativement à l'apparition des bulles, et appelée pour cette raison « vitesse minimale de bullage », pour atteindre ensuite un palier sensiblement constant pendant tout le reste de la phase de fluidisation bouillonnante. Les résultats se présentent sous deux formes ; losanges et axe de gauche des ordonnées illustrant la hauteur de lit en fonction de la vitesse ascendante, carré et axe de droite des ordonnées pour illustrer le taux de vide en fonction de la vitesse de fluidisation.

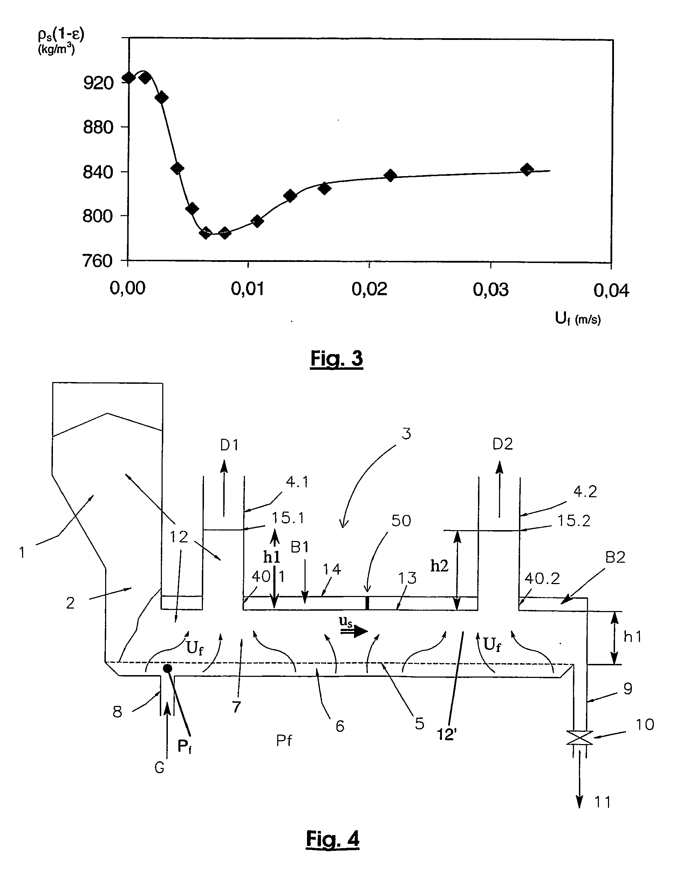

La figure 3 représente les mêmes résultats que ceux de la figure 2, mais exprimés en termes de masse volumique apparente en fonction de la vitesse de fluidisation. On voit qu'au voisinage du minimum, le profil de la courbe est plat quoiqu'un peu dissymétrique de part et d'autre dudit minimum. Ceci permet de définir une zone où la densité apparente varie peu et est proche du minimum. Une première zone, correspondant à une densité apparente au plus supérieure à 1,025 fois la densité apparente minimale, est déterminée par une vitesse de fluidisation comprise entre 0,8 $U_{mb}$ et 1,5 $U_{mb}$. Une zone plus resserrée, correspondant à une densité apparente au plus égale 1,012 fois la densité apparente minimale, est déterminée par une vitesse de fluidisation comprise entre 0,9 et 1,3 fois la vitesse minimale de bullage $U_{mb}$.

Ces observations, effectuées sur un lit expansé « statique », sont transposées au lit hyperdense en mouvement sensiblement horizontal dans une aérocanalisation. En d'autres termes, selon l'invention, pour effectuer un transport optimal par fluidisation potentielle du matériau pulvérulent, on impose une pression de fluidisation telle qu'il s'établit dans le canal supérieur une vitesse de fluidisation voisine de la vitesse minimale de bullage, correspondant aux valeurs les plus faibles de la masse volumique apparente du lit fluidisé, en considérant que cette vitesse minimale de bullage est indépendante du mouvement global horizontal du lit fluidisé dans l'aérocanalisation.

En effet, on vise selon l'invention une vitesse de fluidisation dans un domaine de valeurs défini sur un lit « statique » expansé, tel que celui observé dans une simple colonne de fluidisation sans qu'il soit besoin de faire appel à la géométrie de l'aérocanalisation. Le lit est dit « statique » en ce sens que la suspension ne subit aucun mouvement d'ensemble horizontal. La vitesse de fluidisation de référence, qui est égale à la vitesse de fluidisation du gaz pour laquelle le taux de vide est maximum, est appelée vitesse minimale de bullage. Elle est essentiellement liée aux caractéristiques physiques du matériau et ne dépend pas des caractéristiques géométriques du contenant du lit expansé. Le domaine de vitesse visé correspond, nous l'avons vu, à une plage où le taux de vide varie peu, sa valeur étant égale ou très proche du minimum. La demanderesse a constaté que ces conditions étaient optimales pour obtenir un écoulement de type piston dans une aérocanalisation.

On peut donc viser une vitesse de fluidisation définie indépendamment de la configuration géométrique précise de l'aérocanalisation. Toutefois, le procédé selon l'invention ne peut donner de bons résultats que si l'aérocanalisation a été conçue de telle sorte qu'il y ait fluidisation potentielle du matériau pulvérulent en tout point du canal supérieur susceptible d'être occupé par la suspension.

La vitesse de fluidisation du gaz dans le canal supérieur est la moyenne de la composante verticale ascendante de la vitesse du gaz dans le canal supérieur. Elle peut être mesurée par tout moyen adapté, par exemple en utilisant des grilles de perméabilité connue et des anémomètres à fil chaud. Dans la modalité préférée exposée ci-après, elle peut être plus simplement définie en mesurant le débit de gaz injecté dans le canal inférieur et en divisant sa valeur par la surface de la paroi poreuse séparant le canal inférieur du canal supérieur.

L'aérocanalisation est avantageusement subdivisée en secteurs reliés entre eux, comprenant chacun une colonne d'équilibrage et dans chacun desquels le ciel du canal supérieur est occupé, comme dans EP 1 086 035, par une bulle de gaz sous pression. De la sorte, en définissant de manière appropriée la géométrie de ces secteurs, on peut imposer des conditions de fluidisation sensiblement comparables à celles du lit « statique » expansé dans une colonne de fluidisation, c'est-à-dire imposer une vitesse de gaz essentiellement verticale au niveau de la suspension, la composante horizontale de la vitesse du gaz ne devenant significativement différente de zéro que dans le canal inférieur et dans la bulle sous pression, en particulier au voisinage de la colonne d'équilibrage.

De la sorte, le gaz ne sert qu'à mettre la suspension en expansion, sans entraîner de particules dans la direction horizontale, passe directement dans la bulle et est évacué par la colonne d'équilibrage. Le mouvement horizontal des particules est alors créé uniquement par l'alimentation et le sous-tirage, les colonnes d'équilibrage servant à assurer la mise en charge, secteur par secteur, de l'ensemble de l'aérocanalisation.

Dans ces conditions, la suspension se comporte effectivement comme un liquide et la perte de charge associée au transport des particules solides est très faible. Celle-ci dépend fortement de la cinétique des particules et des conditions de frottement de la suspension sur les parois internes du canal supérieur. Mais elle est, pour une large mesure, indépendante des conditions de fluidisation. Ainsi, on peut atteindre des débits massiques de matériau pulvérulent particulièrement élevés sans pour autant qu'il y ait consommation excessive de gaz de fluidisation. Par exemple, avec un matériau tel que l'alumine métallurgique, on pourrait avec une vitesse de fluidisation de l'ordre de 10 mm/s atteindre, voire dépasser, des débits massiques de l'ordre 70 kg/m$^2$ s, alors que de tels débits nécessiteraient, en transport pneumatique classique des vitesses de gaz de l'ordre de 15 m/s, soit une consommation en gaz 150 fois supérieure !

Pour chaque secteur, la longueur du canal supérieur, la hauteur et la section de la colonne d'équilibrage associée audit secteur sont définies avantageusement de telle sorte que, compte-tenu du débit de matière à transporter, l'intérieur du canal supérieur se trouve dans des conditions de fluidisation voisines du début de bullage et l'intérieur de la colonne se trouve dans des conditions de régime turbulent, la vitesse du gaz en sortie de colonne ne devant pas dépasser un certaine limite, au-delà de laquelle l'entraînement des fines se traduirait par une perte inacceptable en matériau pulvérulent. D'autre part, les portions du canal inférieur de deux secteurs voisins sont reliées entre elles mais en y imposant une certaine perte de charge, typiquement à l'aide de diaphragmes, de telle sorte que la pression de gaz dans le canal supérieur corresponde, dans chaque secteur, à une pression pour laquelle la vitesse de fluidisation reste comprise à l'intérieur du domaine visé, à savoir entre 0,8 et 1,5 (de préférence entre 0,9 et 1,3) fois la vitesse minimale de bullage.

La demanderesse a constaté qu'en visant un régime de fluidisation proche de celui correspondant au minimum de la densité volumique apparente de la suspension, on pouvait non seulement transporter la poudre avec de forts débits mais également, et surtout, on pouvait créer un écoulement de type piston dans l'aérocanalisation, c'est-à-dire un écoulement dans lequel, aux effets de frottement près, toute particule d'une section entrante est soumise à une vitesse axiale identique de sorte que chaque section de suspension conserve, entre la zone d'alimentation et la zone à alimenter, la même distribution de particules en taille et en densité. Il s'agit d'une conservation des histogrammes de distribution et non d'une distribution spatiale car, comme la gravité peut intervenir tout au long du trajet, les particules les plus lourdes, donc les plus denses et/ou les plus grosses, ont tendance à se regrouper en partie base et il peut en résulter que la section ne conserve pas son homogénéité initiale. Il n'en reste pas moins qu'il n'y a pas ségrégation, c'est-à-dire accumulation en un quelconque endroit de l'aérocanalisation de particules d'une taille ou d'une densité particulière. Ce résultat, important pour de nombreuses applications qui impliquent le transfert sur une distance assez grande de poudres plurimodales ou de mélanges de poudres ayant des propriétés différentes, est décrit ci-après dans les exemples.

La vitesse de fluidisation de référence correspond, nous l'avons vu, à la vitesse minimale de bullage, liée aux caractéristiques physiques du matériau pulvérulent. Elle peut être déterminée empiriquement par exemple en utilisant une colonne de fluidisation. Elle peut être également déterminée semi-empiriquement à partir de formules issues de la littérature et après recalage de certaines constantes.

Par exemple, on peut utiliser la formule empirique proposée par Abrahamsen et al. (Powder Technology, Vol. 26, Issue 1, May-June 1980) qui donne la vitesse minimale de bullage en fonction d'une part d'une dimension caractéristique des particules ($d_p$ exprimé en mètres) et d'autre part de la masse volumique pg (en $m^3/kg$) ainsi que la viscosité $\mu_g$ dynamique du gaz (en Pa.s),

$$U_{mb} = 33 \, d_p \left( \frac{\rho_g}{\mu_g} \right)^{0,1}$$

La demanderesse a constaté que, pour l'alumine métallurgique, on peut estimer avec une bonne précision la vitesse minimale de bullage $U_{mb}$ (exprimée en m/s), à l'aide de cette formule à condition de prendre le diamètre médian D90 comme taille caractéristique des particules dp.

D'autre part, la demanderesse a constaté que les colonnes d'équilibrage doivent être conçues de préférence de telle sorte qu'avec la vitesse de fluidisation visée dans le canal supérieur, on atteigne dans la colonne un régime de fluidisation turbulente, où le lit est constitué de petits éléments de phase gazeuse et de phase solide qui vont et viennent rapidement et où la surface du lit est difficile à distinguer, la partie inférieure du lit étant significativement plus dense que la partie supérieure. Ainsi conçues, les colonnes d'équilibrage se comportent comme de véritables sources de mise en charge des secteurs d'aérocanalisation auxquels elles sont associées. En d'autres termes, et pour poursuivre l'analogie avec le comportement liquide de la suspension, elles se comportent comme des châteaux d'eau installés tout le long de ladite aérocanalisation, La vitesse du gaz en sortie de colonne doit d'autre part être limitée de façon à éviter l'entraînement d'une trop grande quantité de fines particules en dehors du dispositif. On peut par ailleurs surmonter ladite colonne d'un pot d'expansion de section plus grande de façon à diminuer ladite vitesse et récupérer une partie des fines entraînées.

La Figure 1 expose la classification effectuée par Geldart (Powder Technology, Vol. 7, Issue 5, May 1973, 285-292), et qui est très largement utilisée pour classer les poudres en fonction de leur aptitude à la fluidisation. Elle classe les poudres en fonction de la densité et la taille des particules : la classe A représente les poudres facilement fluidisables, dites « fusantes », la classe B représente les poudres relativement facilement fluidisables, dites poudres sableuses, la classe C représente les poudres fines cohésives difficilement fluidisables et la classe D représente les poudres granuleuses, à fluidisation irrégulière.

Le domaine hachuré correspond à la classe A, à une petite partie de la classe C et à une petite partie de la classe B, toutes deux voisines de la classe A, c'est-à-dire que le matériau pulvérulent particulièrement adapté pour le transport selon le procédé de l'invention est toute poudre fusante de la catégorie A, les plus grosses des poudres dites cohésives de la classe C, la taille mini autorisée étant d'autant plus faible que le matériau est dense, et les plus fines des poudres dites sableuses de la classe B, la taille maxi autorisée étant d'autant plus faible que le matériau est dense.

Pour les besoins du brevet, cette zone hachurée, résultant d'observations expérimentales, à été représentée par le polygone LMNOPORSTU, limité dans la pratique au polygone LMNOU défini par un ensemble d'inéquations, mais il est bien entendu que ces frontières ne sont pas des frontières aussi strictes que ne le laissent supposer leurs formulations mathématiques et que cet ensemble doit être considéré comme désignant également le proche voisinage de la zone ainsi délimitée.

Les figures 2 et 3, commentées plus haut, exposent les résultats obtenus sur une alumine métallurgique, c'est-à-dire une alumine destinée à la fabrication de l'aluminium par électrolyse ignée.

La figure 4 est une vue schématique en coupe verticale du dispositif, comportant ici une aérocanalisation horizontale, pouvant symboliser une portion de convoyeur primaire ou de convoyeur secondaire, reliant le dispositif de stockage à un moyen d'évacuation.

La figure 5 est un schéma illustrant une aérocanalisation utilisée dans le cadre du procédé selon l'invention et subdivisée en secteurs.

La figure 6 est un schéma illustrant une aérocanalisation pilote utilisée dans le cadre du procédé selon l'invention pour définir les conditions optimales permettant d'obtenir un transfert sans ségrégation.

La figure 7 illustre des résultats de dosage de traceur effectué sur le pilote de la figure 6.

**Exemples**

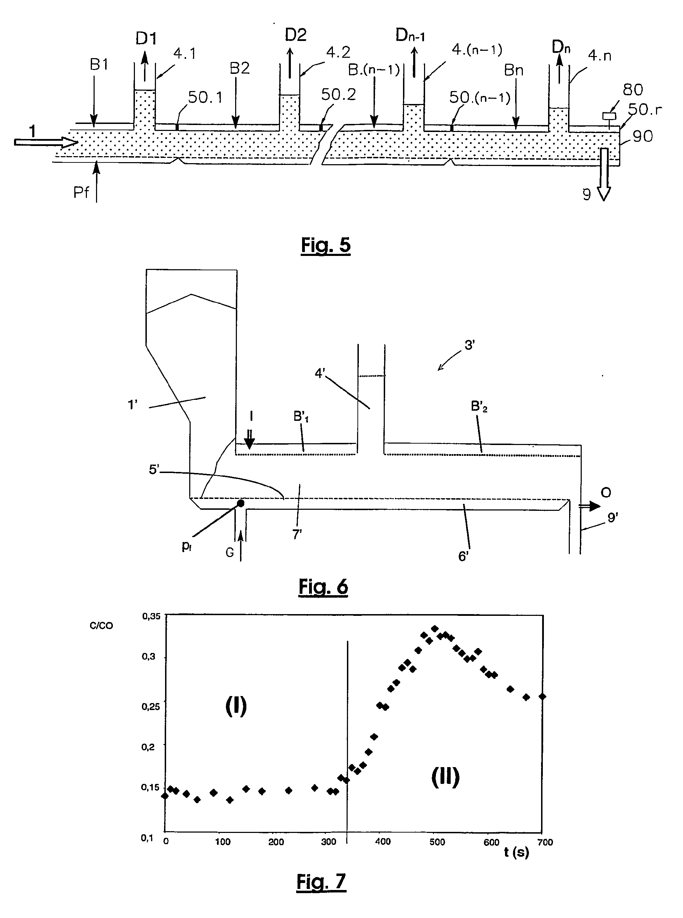

**Exemple 1 (Figures 4 et 5)**

Le dispositif illustré en figure 4 se compose d'un réservoir de stockage aérien **1** du matériau à transporter, relié par une canalisation **2** à un convoyeur **3** du type aérocanalisation ou aéroglissière à fluidisation, de colonnes d'équilibrage **4.1** et **4.2,** d'un moyen d'évacuation **9** du convoyeur, qui, à l'aide d'un système de dosage contrôlé **10,** entraîne le matériau pulvérulent vers la zone à alimenter **11.**

Le réservoir de stockage aérien **1** contient le matériau pulvérulent **12** en vrac, soumis à la pression atmosphérique. Ce réservoir est en charge sur l'une des extrémités du convoyeur horizontal **3** par l'intermédiaire de la canalisation **2**. Le convoyeur **3**, longiligne, se compose d'une paroi poreuse **5** séparant le canal inférieur **6** et le canal supérieur **7** dans lequel circule le matériau pulvérulent.

Un gaz de fluidisation **G** est introduit par une canalisation **8** dans le canal inférieur **6**, où il est soumis à la pression de fluidisation $p_f$. Ce gaz passe au travers de la paroi poreuse **5**, appelée également toile, puis au travers du matériau pulvérulent qui remplit le canal supérieur **7** du convoyeur. Le gaz est évacué par les extrémités supérieures ouvertes des colonnes d'équilibrage **4.1** et **4.2**. Les niveaux de remplissage **15.1** et **15.2**, correspondent à des hauteurs manométriques $h_1$ et $h_2$ qui équilibre la pression du gaz dans le canal supérieur.

Le ciel du canal supérieur **7**, est occupé par des bulles sous pression **B1** et **B2**, dont les volumes sont parfaitement délimités dans l'espace par

- la paroi de la partie haute **14** du canal supérieur **7**,
- le fer plat **50**,
- les pénétrations **40.1** et **40.2** des colonnes d'équilibrage **4.1** et **4.2**
- et le niveau supérieur **13** du matériau pulvérulent **12**.

La figure 4 montre schématiquement comment s'effectue la circulation du gaz **G** de fluidisation, qui passe à travers la toile **5** puis se dirige vers les colonnes d'équilibrage **4.1** et **4.2** de part et d'autre du barrage **50**.

Le matériau est animé d'un mouvement d'ensemble horizontal symbolisé ici par le vecteur associé à la vitesse $u_s$. Le gaz traverse la paroi poreuse **5** et s'écoule à travers la suspension **12'** avec un mouvement global ascendant. Dans une modalité préférée de l'invention, on dimensionne l'aérocanalisation de telle sorte que la vitesse $U_f$ du gaz au niveau de l'espace occupé par la suspension est sensiblement verticale.

L'aérocanalisation est munie d'un moyen d'évacuation **9** qui transforme le mouvement horizontal du matériau pulvérulent en un mouvement vertical ou fortement incliné permettant d'alimenter soit un convoyeur secondaire, si l'aérocanalisation est un convoyeur primaire, soit une trémie intégrée à la superstructure d'une cuve d'électrolyse, si l'aérocanalisation est un convoyeur secondaire. Les trémies sont équipées à leur partie inférieure de systèmes de dosage contrôlé **10** permettant d'introduire les quantités d'alumine désirées dans la cuve.

La figure 5 représente une aérocanalisation subdivisée en n secteurs, chaque secteur étant associé à une bulle Bi (i=1 à n) et une colonne d'équilibrage Di (i=1 à n).

En fin d'aérocanalisation, la bulle $B_n$ est associée au moyen d'évacuation **9**. Le barrage **50.n** est en fait confondu avec la paroi d'extrémité **90** du convoyeur, située en aval de la dernière colonne d'équilibrage **4.n**. Un capteur de pression **80**, situé à proximité de l'extrémité **90** de l'aérocanalisation **3** permet de mesurer la pression dans la bulle $B_n$, qui est la pression de bulle la plus faible en raison du cumul des pertes de charge (assez faibles, essentiellement dues au frottement des particules le long des parois) dans chacun des secteurs. La connaissance de cette valeur permet de réguler la pression de fluidisation $p_f$.

Les portions du canal inférieur de deux secteurs voisins sont reliées entre elles mais en y imposant une certaine perte de charge, typiquement à l'aide de diaphragmes, de telle sorte que la pression de gaz dans le canal supérieur correspond, dans chaque secteur, à une pression pour laquelle la vitesse de fluidisation reste comprise à l'intérieur du domaine visé, à savoir entre 0,8 et 1,5 (de préférence entre 0,9 et 1,3) fois la vitesse minimale de bullage.

**Exemple 2 (Figures 6 et 7) - Mise en évidence d'un écoulement piston**

Pour définir les conditions optimales d'obtention d'un écoulement piston, nous avons utilisé un convoyeur pilote **3'** tel que celui schématisé en figure 6.

L'aérocanalisation **3'** comprend un canal supérieur **7'** de près de 5 mètres de long avec une section de 300 mm (hauteur) sur 160 mm (largeur). Le canal supérieur **7'** est séparé du canal inférieur **6'** par une toile **5'** de perméabilité donnée.

Un rotamètre permet de connaître le débit total de l'air **G** alimentant le canal inférieur. La pression $p_f$ est mesurée et enregistrée. La colonne d'équilibrage **4'** a un diamètre intérieur de 326 mm sur une hauteur de 5 m et elle plonge de 50 mm dans l'aérocanalisation. Cette pénétration de la colonne d'équilibrage **4'** dans le canal supérieur **7'** forme un barrage qui sépare le ciel du canal supérieur **7'** en deux bulles **B'1** et **B'2**. La colonne **1'** d'alimentation en alumine a une hauteur d'environ 6 mètres.

Le matériau à transporter est de l'alumine métallurgique AR75 de ALUMINIUM PECHINEY. Le traceur choisi provient de cette même poudre AR75 après coloration. Il est parfaitement miscible à l'AR75 résidant dans l'aérocanalisation et il possède exactement les mêmes propriétés d'écoulement que l'alumine testée. La méthode de dosage consiste à effectuer un test de blancheur. Elle permet de doser précisément, simplement et facilement une quantité de marqueur très faible et de comparer cette quantité à la quantité initialement versée dans l'aérocanalisation.

Une quantité connue de marqueur est injectée sous pression (en **I**) dans la partie haute du canal supérieur **7'**, juste après la colonne **1'** d'alimentation en solide. Un échantillonnage précis (toutes les 5s) est réalisé (en **O**) par prélèvement au milieu d'un piquage situé à la sortie de la partie horizontale de l'aérocanalisation. Nous avons, avec de l'alumine colorée, réalisé des courbes d'étalonnage. Grâce à ces courbes, on détermine le pourcentage d'alumine colorée présente dans l'AR 75 rapidement et simplement. Cette information permet de déterminer le temps de séjour de l'alumine et son mode de circulation dans l'aérocanalisation.

Les expériences de traçage ont été réalisées pour plusieurs débits de solide et de gaz. La figure 7 est typique des résultats observés. Elle montre l'évolution de la concentration en traceur au cours du temps, exprimée en pourcentage de la concentration en traceur par rapport à sa concentration initiale. La courbe choisie correspond à un débit de solide de 42 kg/s/m$^2$ et une vitesse de fluidisation de 10 mm/s. Dans un premier temps **(I)**, on n'observe aucune modification de la concentration en traceur. On observe dans la seconde partie **(II)** de la courbe un pic lié au passage du traceur : la montée, relativement brutale, est caractéristique d'un écoulement piston. Le retard observé est lié au déplacement physique du traceur depuis le point d'injection jusqu'au point de prélèvement. La concentration du traceur ne retourne pas à sa valeur initiale en raison du système de recyclage du solide employé dans ce pilote. La localisation de la zone d'injection du traceur et celle de la zone de prélèvement montrent qu'il y a bien eu mélange dans la section de la suspension, c'est-à-dire un mouvement des particules dans un plan perpendiculaire à l'axe de l'aérocanalisation, c'est-à-dire à la direction du mouvement d'ensemble des particules.

**Exemple 3 Diverses vitesses minimales de bullage pour divers matériaux :**

La vitesse minimale de bullage a été déterminée pour divers matériaux pulvérulents :

- une alumine métallurgique
L'alumine testée est l'alumine commercialisée sous la dénomination AR75 par ALUMINIUM PECHINEY. La vitesse minimale de bullage mesurée dans une colonne de fluidisation est voisine de 7 mm/s et la vitesse minimale de bullage calculée par la formule d'Abrahmsen est voisine de 10 mm/s.

- un sable
Le sable testé a les caractéristiques suivantes :

  ○ ps=2409 kg/m$^3$
  ○ D10= 170 μm
  ○ D50= 302 μm
  ○ D90= 503 μm

Il appartient à la classe B de la classification de Geldart. En prenant D50 comme taille caractéristique des particules, ce matériau est proche de la frontière MN du polygone LMNOPQRSTU de la figure 1. La vitesse minimale de bullage mesurée dans une colonne de fluidisation est très proche de la vitesse minimale de fluidisation. Elle est voisine de 65 mm/s. La vitesse minimale calculée par la formule d'Abrahmsen est voisine de 75 mm/s

- un sel
Le sel testé est du chlorure de sodium. Il a les caractéristiques suivantes :

  ○ ρs=2082 kg/m$^3$
  ○ D10= 116 μm
  ○ D50= 425 μm
  ○ D90= 761 μm

Il appartient également à la classe B de la classification de Geldart. En prenant D50 comme taille caractéristique des particules, ce matériau est à l'intérieur du polygone LMNOPQRSTU de la figure 1, proche du segment MN. La vitesse minimale de bullage mesurée dans une colonne de fluidisation est très proche de la vitesse minimale de fluidisation. Elle est voisine de 100 mm/s. La vitesse minimale calculée par la formule d'Abrahmsen est voisine de 125 mm/s

Dans la mesure où le chlorure de sodium est également transporté pour alimenter des cuves d'électrolyse dans le cadre de la fabrication du sodium et du chlore, un tel convoyeur utilisant la fluidisation potentielle et fonctionnant avec un régime de vitesse de fluidisation tel que celui revendiqué, peut se révéler particulièrement intéressant.

- trois ciments artificiels:
Ce sont des mélanges de divers minéraux contenant typiquement de la silice, de l'alumine et du carbonate de chaux et qui, réduits en poudre par voie mécanique, font prise sous l'action de l'eau. Trois variétés ont été testées. Elles présentent les caractéristiques suivantes :

  1) Ciment cru: ρ$_s$ = 2780 kg/m3
  D10 = 2,0 μm; D50 = 15,3 μm ; D90 = 94,7 μm
  Ce matériau appartient à la classe C

  2) Ciment fin : ρ$_s$ = 3090 kg/m3
  D10 = 3,3 μm; D50 = 18,2 μm; D90 = 47,1 μm
  Ce matériau appartient à la zone frontière entre la classe A et la classe C

3) Ciment extra fin : ρs = 3130 kg/m3
D10 = 2,2 μm; D50=11,6 μm; D90 = 28,5 μm
Ce matériau appartient à la classe C

Les tests menés sur une colonne de fluidisation ont permis de déterminer les vitesses minimales de fluidisation, qui s'apparentent à celles obtenues pour l'alumine et qui sont respectivement voisines de 3,3 mm/s, 3 mm/s et 4,3 mm/s
Les tests menés sur une aérocanalisation-pilote du type de celle décrite dans l'exemple précédent et illustrée en figure 6, ont montré que les trois types de poudre commencent à s'écouler sur le couloir horizontal à partir d'une vitesse du gaz de fluidisation de l'ordre de 28-30 mm/s. On constate que pour ce type de matériau, l'application de la formule d'Abrahmsen avec dp = D90 ne permet pas d'obtenir une estimation satisfaisante de la plage de valeurs à viser pour la vitesse de fluidisation.

## Revendications

1. Procédé permettant de transporter, par fluidisation potentielle, un matériau pulvérulent, dans lequel on installe un dispositif entre la zone d'alimentation, typiquement une zone de stockage dudit matériau pulvérulent, et la zone à alimenter, ledit dispositif étant un dispositif clos comprenant au moins un convoyeur (3) substantiellement horizontal, appelé "aérocanalisation", qui comprend un canal inférieur (6) destiné à la circulation d'un gaz et un canal supérieur (7) destiné à la circulation du matériau pulvérulent, ledit canal inférieur et ledit canal supérieur étant séparés par une paroi poreuse (5) pouvant être traversée par ledit gaz, ledit canal inférieur étant muni d'au moins une tubulure (8) d'alimentation en gaz, procédé dans lequel on remplit le canal supérieur (7) avec ledit matériau pulvérulent et on alimente le canal inférieur (6) en gaz sous une pression permettant la fluidisation potentielle dudit matériau pulvérulent dans ledit canal supérieur, ledit canal supérieur étant muni d'au moins une colonne d'équilibrage (4.1, 4.2) dont l'extrémité supérieure est ouverte, qui est remplie en matériau pulvérulent et dont la hauteur de remplissage équilibre la pression régnant dans le canal supérieur, ledit procédé étant **caractérisé en ce qu'on** détermine au préalable une vitesse de fluidisation de référence, appelée « vitesse minimale de bullage », égale à la vitesse de fluidisation du gaz pour laquelle le taux de vide est maximum et **en ce qu'on** règle la pression de fluidisation à une valeur telle que la vitesse de fluidisation dudit gaz dans ledit canal supérieur soit comprise entre 0,8 et 1,5 fois ladite vitesse minimale de bullage, de préférence entre 0,9 et 1,3 fois ladite vitesse minimale de bullage.

2. Procédé selon la revendication 1 caractérisé en qu'il permet de transporter des matériaux pulvérulents facilement fluidisables de type fusants ou sableux, mono- ou plurimodaux, dont les particules présentent une forme globalement convexe avec un facteur de forme substantiellement proche de 1, typiquement compris entre 0,5 et 2, et ont un D50 typiquement compris entre 15 microns et 500 microns.

3. Procédé selon la revendication 1 ou 2 caractérisé en qu'on l'applique pour transporter des matériaux pulvérulents dont la taille caractéristique dp des particules, typiquement représentée par le diamètre médian D50, et la masse volumique moyenne $\rho_s$ appartiennent au domaine défini par les inéquations suivantes :

a) $Y \geq 0$
b) $Y + 3,969\ X - 4,668 \geq 0$
c) $Y + 0,097\ X - 0,796 \leq 0$
d) $Y + 0,631\ X - 1,864 \leq 0$
e) $Y + 1,357\ X - 3,662 \leq 0$

où $X=\log_{10}(dp)$, dp étant exprimé en micromètres et où $Y= \log_{10}(\rho_s-\rho_g)$, ps et ρg étant exprimés en kg/dm$^3$, ρg étant la masse volumique du gaz de fluidisation.

4. Procédé selon l'une quelconque des revendications 1 à 3 dans lequel on détermine au préalable ladite vitesse minimale de bullage en observant, dans une colonne de fluidisation, l'expansion d'une suspension résultant du mélange dudit matériau pulvérulent et dudit gaz de fluidisation et en relevant la vitesse de fluidisation correspondant au volume maximum occupé par ladite suspension.

5. Procédé selon l'une quelconque des revendications 1 à 4, dans lequel la dite vitesse de fluidisation est déterminée en mesurant en plusieurs endroits du canal supérieur la composante verticale ascendante de la vitesse du gaz et en retenant la moyenne des valeurs mesurées.

6. Procédé selon l'une quelconque des revendications 1 à 5, dans lequel on utilise une aérocanalisation subdivisée en secteurs reliés entre eux, comprenant chacun une colonne d'équilibrage et dans chacun desquels le ciel du canal supérieur est occupé par une bulle de gaz sous pression, la longueur du secteur, la hauteur et la section de la colonne d'équilibrage associée étant définies de telle sorte que la vitesse de gaz est essentiellement verticale au niveau de la suspension, la composante horizontale ne devenant significativement différente de zéro que dans le canal inférieur et dans la bulle sous pression.

**7.** Procédé selon la revendication 6 dans lequel la dite vitesse moyenne de fluidisation est déterminée en divisant le débit de gaz injecté dans le canal inférieur par la surface de la paroi poreuse séparant le canal inférieur du canal supérieur.

**8.** Procédé selon la revendication 6 ou 7, dans lequel chaque colonne d'équilibrage associée à chaque secteur a été conçue de telle sorte que lorque la vitesse de fluidisation dans le canal supérieur appartient au domaine visé selon la revendication 1, on atteigne dans la colonne d'équilibrage un régime de fluidisation turbulente.

**9.** Procédé selon la revendication 8, dans lequel au moins une colonne d'équilibrage est surmontée d'un pot d'expansion.

**10.** Procédé selon la revendication 1 dans lequel ledit matériau pulvérulent est une alumine métallurgique et dans lequel on détermine au préalable ladite vitesse minimale de bullage en utilisant la formule empirique suivante : $U_{mb} = 33 \, d_p \left( \dfrac{\rho_g}{\mu_g} \right)^{0,1}$ , où la masse volumique $\rho g$ est exprimée en $m^3/kg$, la viscosité dynamique du gaz $\mu_g$ est exprimée en Pa.s , $U_{mb}$ est exprimé en m/s et où la taille caractéristique des particules dp, exprimée en mètres, correspond au diamètre médian D90.

**Claims**

**1.** A process making it possible to transport, by potential fluidization, a powder material, in which a device is fitted between the supply zone, typically a storage zone of said powder material, and the zone to be supplied, said device being a closed device including at least one substantially horizontal conveyor (3), called an "air chute", which includes a lower duct (6) designed for the circulation of a gas and an upper duct (7) designed for the circulation of powder material, said lower duct and said upper duct being separated by a porous wall (5) that said gas can pass through, said lower duct being provided with at least one gas feeding hose (8), a process in which the upper duct (7) is filled with said powder material and the lower duct (6) is supplied with gas at a pressure that allows the potential fluidization of said powder material in said upper duct, said upper duct being provided with at least one balancing column (4.1, 4.2) whose top end is open, which is filled with powder material to a height that balances the pressure prevailing in the upper duct, said process being **characterized in that** a reference fluidization speed, called the "minimal bubbling speed" is first determined, equal to the fluidization speed of the gas for which the void fraction is maximum, and **in that** the fluidization pressure is set to a value such that the fluidization speed of said gas in said upper duct ranges between 0.8 and 1.5 times said minimal bubbling speed, preferably between 0.9 and 1.3 times said minimal bubbling speed.

**2.** A process according to claim 1 **characterized in that** it makes it possible to transport easily fluidizable, fusing or sandy type, mono or multi-modal powder materials, whose particles are globally convex in shape with a shape factor substantially close to 1, typically ranging between 0.5 and 2, and have a D50 typically ranging between 15 microns and 500 microns.

**3.** A process according to claim 1 or 2 **characterized in that** it is applied to transport powder materials whose characteristic particle size $d_p$, typically represented by the median diameter D50, and the average density $\rho_s$ belong to the field defined by the following inequalities:

  a) $Y \geq 0$
  b) $Y + 3.969 \, X - 4.668 \geq 0$
  c) $Y + 0.097 \, X - 0.796 \leq 0$
  d) $Y + 0.631 \, X - 1.864 \leq 0$
  e) $Y + 1.357 \, X - 3.662 \leq 0$

where $X = \log_{10}(d_p)$, dp being expressed in micrometers and where $Y = \log_{10}(\rho_s - \rho_g)$, $\rho_s$ and $\rho_g$ being expressed in $kg/dm^3$, $\rho_g$ being the bulk density of the fluidization gas.

**4.** A process according to any of claims 1 to 3 in which said minimal bubbling speed is determined beforehand by observing, in a fluidization column, the expansion of a suspension resulting from the mixture of said powder material and said fluidization gas and by recording the fluidization speed corresponding to the maximum volume occupied by said suspension.

**5.** A process according to any of claims 1 to 4, in which said fluidization speed is given by measuring the ascending vertical component of the gas speed at several points on the upper duct and by taking the average of the values measured.

**6.** A process according to any of claims 1 to 5, in which an air chute is used, which is subdivided into sectors connected to each other, each comprising a balancing column and in each of which the upper zone of the upper duct is occupied by a gas bubble under pressure, the length of the sector, the height and the section of the associated balancing column being defined so that the speed of gas is primarily vertical at the level of the suspension, the horizontal component becoming significantly different from zero only in the lower duct and in the bubble under pressure.

7. A process according to claim 6 in which said mean fluidization velocity is given by dividing the flow rate of the gas injected into the lower duct by the surface of the porous wall separating the lower duct from the upper duct.

8. A process according to claim 6 or 7, in which each balancing column associated with each sector has been designed so that when the fluidization speed in the upper duct belongs to the field aimed at according to claim 1, a state of turbulent fluidization is reached in the balancing column.

9. A process according to claim 8, in which at least one balancing column is surmounted by an expansion vessel.

10. A process according to claim 1 in which said powder material is a metallurgical alumina and in which said minimal bubbling speed is determined beforehand using the following empirical formula:

$$U_{mb} = 33\, d_p \left( \frac{\rho_g}{\mu_g} \right)^{0,1}$$, where the density $\rho_g$ is

expressed in m³/kg, the dynamic viscosity of the gas $\mu_g$ is expressed in Pa.s, $U_{mb}$ is expressed in m/s and where the characteristic particle size $d_p$, expressed in meters, corresponds to the median diameter D90.

**Patentansprüche**

1. Verfahren zum Transportieren eines pulverförmigen Materials durch potentielles Fluidisieren, wobei zwischen der Speisezone, typischerweise einer Vorratszone für das pulverförmige Material, und der zu speisenden Zone eine Vorrichtung angeordnet ist, wobei die Vorrichtung eine geschlossene Vorrichtung ist, die wenigstens eine im Wesentlichen horizontale Fördereinrichtung (3), die sogenannte "Luftleitung" umfasst, welche einen unteren Kanal (6) für den Umlauf eines Gases und einen oberen Kanal (7) für den Umlauf des pulverförmigen Materials aufweist, wobei der untere Kanal und der obere Kanal durch eine poröse Wand (5) voneinander getrennt sind, durch die das Gas hindurchströmen kann, wobei der untere Kanal mit wenigstens einem Rohrstutzen (8) zur Einspeisung von Gas versehen ist, Verfahren, bei dem der obere Kanal (7) mit dem pulverförmigen Material gefüllt und der untere Kanal (6) mit einem Gas gespeist wird, welches mit einem Druck beaufschlagt wird, der die potentielle Fluidisierung des pulverförmigen Materials im oberen Kanal ermöglicht, wobei der obere Kanal mit mindestens einer Ausgleichssäule (4.1, 4.2) versehen ist, deren oberes Ende offen ist, die mit pulverförmigem Material gefüllt wird und deren Füllhöhe den im oberen Kanal herrschenden Druck ausgleicht, wobei das Verfahren **dadurch gekennzeichnet ist, dass** vorab eine als Referenz dienende Fluidisiergeschwindigkeit bestimmt wird, die sogenannte "minimale Blasenbildungsgeschwindigkeit", die der Fluidisiergeschwindigkeit des Gases entspricht, bei der der Lückengrad maximal ist, und dass der Fluidisierdruck auf einen solchen Wert eingestellt wird, dass die Fluidisiergeschwindigkeit des Gases im oberen Kanal zwischen 0,8 und 1,5 mal so hoch wie die minimale Blasenbildungsgeschwindigkeit, vorzugsweise zwischen 0,9 und 1,3 mal so hoch wie die minimale Blasenbildungsgeschwindigkeit ist.

2. Verfahren nach Anspruch 1, **dadurch gekennzeichnet, dass** es den Transport leicht fluidisierbarer, schmelzbarer oder sandartiger, mono- oder polymodaler pulverförmiger Materialien ermöglicht, deren Teilchen eine insgesamt konvexe Form mit einem im Wesentlichen bei 1, typischerweise zwischen 0,5 und 2 liegenden Formfaktor aufweisen und einen D50 insbesondere zwischen 15 μm und 500 μm haben.

3. Verfahren nach Anspruch 1 oder 2, **dadurch gekennzeichnet, dass** es beim Transport pulverförmiger Materialien angewendet wird, deren charakteristische Teilchengröße $d_p$, typischerweise durch den mittleren Teilchendurchmesser D50 dargestellt, und mittlere Dichte $p_s$ in dem durch folgende Ungleichungen definierten Bereich liegen:

a) $Y \geq 0$
b) $Y + 3,969\, X - 4,668 \geq 0$
c) $Y + 0,097\, X - 0,796 \leq 0$
d) $Y + 0,631\, X - 1,864 \leq 0$
e) $Y + 1,357\, X - 3,662 \leq 0$

mit $X = \log_{10}(d_p)$, wobei $d_p$ in Mikrometern ausgedrückt ist, und mit $Y = \log_{10}(p_s - p_g)$, wobei $p_s$ und $p_g$ in kg/dm³ ausgedrückt sind, worin $p_g$ die Dichte des Fluidisiergases ist.

4. Verfahren nach irgendeinem der Ansprüche 1 bis 3, bei dem vorab die minimale Blasenbildungsgeschwindigkeit bestimmt wird, indem in einer Fluidisiersäule die Expansion einer Suspension beobachtet wird, die aus dem Gemisch aus pulverförmigem Material und Fluidisiergas resultiert, und die Fluidisiergeschwindigkeit ermittelt wird, die dem von der Suspension eingenommenen maximalen Volumen entspricht.

**5.** Verfahren nach irgendeinem der Ansprüche 1 bis 4, bei dem die Fluidisiergeschwindigkeit durch Messen der vertikalen Aufwärtskomponente an mehreren Stellen des oberen Kanals und durch Registrieren des Mittelwerts der Messwerte bestimmt wird.

**6.** Verfahren nach irgendeinem der Ansprüche 1 bis 5, bei dem eine Luftleitung verwendet wird, die in miteinander verbundene Abschnitte unterteilt ist, die jeweils eine Ausgleichssäule aufweisen und bei denen der obere Abschluss des oberen Kanals mit einer druckbeaufschlagten Gasblase besetzt ist, wobei die Länge des Abschnitts, die Höhe und der Querschnitt der zugehörigen Ausgleichssäule so definiert werden, dass die Gasgeschwindigkeit im Wesentlichen vertikal im Bereich der Suspension ist, wobei die horizontale Komponente nur im unteren Kanal und in der druckbeaufschlagten Gasblase deutlich von Null verschieden wird.

**7.** Verfahren nach Anspruch 6, bei dem die mittlere Fluidisiergeschwindigkeit bestimmt wird, indem die in den unteren Kanal eingeblasene Gasmenge durch die Fläche der porösen Wand dividiert wird, die den unteren Kanal und den oberen Kanal voneinander trennt.

**8.** Verfahren nach Anspruch 6 oder 7, bei dem jede dem jeweiligen Abschnitt zugeordnete Ausgleichssäule so ausgebildet ist, dass, wenn die Fluidisiergeschwindigkeit im oberen Kanal in dem in Anspruch 1 anvisierten Bereich liegt, turbulente Fluidisierbedingungen in der Ausgleichssäule erzielt werden.

**9.** Verfahren nach Anspruch 8, bei dem über mindestens einer Ausgleichssäule ein Expansionsgefäß angeordnet ist.

**10.** Verfahren nach Anspruch 1, bei dem das pulverförmige Material metallurgisches Aluminiumoxid ist und bei dem vorab die minimale Blasenbildungsgeschwindigkeit mit Hilfe folgender empirischer Formel bestimmt wird:

$$U_{mb} = 33\, d_p \left( \frac{p_g}{\mu_g} \right)^{0,1}$$ , wobei die Dichte

$p_g$ in $m^3/kg$ ausgedrückt ist, die dynamische Viskosität des Gases $\mu_g$ in Pa.s ausgedrückt ist, $U_{mb}$ in m/s ausgedrückt ist, und wobei die charakteristische Teilchengröße $d_p$, ausgedrückt in Metern, dem mittleren Teilchendurchmesser D90 entspricht.

**Fig. 1**

**Fig. 2**

**Fig. 3**

**Fig. 4**

**Fig. 5**

**Fig. 6**

**Fig. 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3268264 A
- FR 2534891
- FR 2354891
- EP 1086035 A
- EP 0179055 B

**Littérature non-brevet citée dans la description**

- **ABRAHAMSEN et al.** *Powder Technology,* Mai 1980, vol. 26 (1
- **GELDART.** *Powder Technology,* Mai 1973, vol. 7 (5), 285-292